# EUROPEAN PATENT SPECIFICATION

(11) **EP 3 977 413 B1**
(45) Date of publication and mention of the grant of the patent: **31.12.2025**
(21) Application number: 20815640.6
(22) Date of filing: 29.05.2020
(51) Int. Cl.: G06T 15/00, G06T 15/04, G06T 1/20

(54) **SOFTWARE-CONTROLLED VARIABLE WAVEFRONT SIZE EXECUTION AT GPU**
SOFTWAREGESTEUERTE VARIABLE WELLENFRONTGRÖSSENAUSFÜHRUNG AN EINER GPU
EXÉCUTION DE TAILLE DE FRONT D'ONDE VARIABLE COMMANDÉE PAR LOGICIEL AU NIVEAU D'UNE GPU

(30) Priority: 29.05.2019 US 201916425625
(43) Date of publication of application: 06.04.2022
(73) Proprietor: Advanced Micro Devices, Inc., Santa Clara, CA 95054 (US)
(72) Inventor: EMBERLING, Brian, Santa Clara, CA 95054 (US); MANTOR, Michael, Santa Clara, CA 95054 (US)
(74) Representative: Hancox, Jonathan Christopher
(86) International application number: PCT/US2020/035374
(87) International publication number: WO 2020/243604

(56) References cited:
- WO-A1-2018/156635
- KR-A- 20160 138 878
- US-A1- 2011 219 221
- US-A1- 2013 117 541
- US-A1- 2015 220 346
- US-A1- 2019 278 605
- GARG RAHUL: "A compiler for parallel execution of numerical Python programs on graphics processing", MASTER OF SCIENCE THESIS, 1 January 2009 (2009-01-01), pages 1 - 79, XP093052015, Retrieved from the Internet <URL:https://era.library.ualberta.ca/items/74e1b504-d669-455e-8ae9-0deb762f95d1/download/51d6b1f8-561d-45e9-a0dc-9869c540b6aa> [retrieved on 20230606]
- DONG HYUK WOO ET AL: "COMPASS", ACM SIGPLAN NOTICES, ASSOCIATION FOR COMPUTING MACHINERY, US, vol. 45, no. 3, 13 March 2010 (2010-03-13), pages 297 - 310, XP058187928, ISSN: 0362-1340, DOI: 10.1145/1735971.1736054
- JACK WADDEN ET AL: "Real-world design and evaluation of compiler-managed GPU redundant multithreading", ACM SIGARCH COMPUTER ARCHITECTURE NEWS, ACM SPECIAL INTEREST GROUP ON COMPUTER ARCHITECTURE, 2 PENN PLAZA, SUITE 701 NEW YORK NY 10121-0701 USA, vol. 42, no. 3, 14 June 2014 (2014-06-14), pages 73 - 84, XP058059545, ISSN: 0163-5964, DOI: 10.1145/2678373.2665686
- LAINE SAMULI ET AL: "Permission Megakernels Considered Harmful: Wavefront Path Tracing on GPUs", 1 January 2013 (2013-01-01), XP093051997, Retrieved from the Internet <URL:https://dl.acm.org/doi/pdf/10.1145/2492045.2492060> [retrieved on 20230606]

## Description

### BACKGROUND

A graphics processing unit (GPU) is a complex integrated circuit that is configured to perform graphics-processing tasks. For example, a GPU can execute graphics-processing tasks required by an end-user application, such as a video-game application. GPUs are also increasingly being used to perform other tasks which are unrelated to graphics. The GPU can be a discrete device or can be included in the same device as another processor, such as a central processing unit (CPU).

In many applications, such as graphics processing in a GPU, a sequence of work-items, which can also be referred to as threads, are processed so as to output a final result. In many modern parallel processors, for example, processors within a single instruction multiple data (SIMD) core synchronously execute a set of work-items. A plurality of identical synchronous work-items that are processed by separate processors are referred to as a wavefront or warp.

During processing, one or more SIMD cores concurrently execute multiple wavefronts. Execution of the wavefront terminates when all work-items within the wavefront complete processing. Each wavefront includes multiple work-items that are processed in parallel, using the same set of instructions. In some cases, the number of work-items in a wavefront does not match the number of execution units of the SIMD cores. In one embodiment, each execution unit of a SIMD core is an arithmetic logic unit (ALU). When the number of work-items in a wavefront does not match the number of execution units of the SIMD cores, determining how to schedule instructions for execution can be challenging.

### BRIEF DESCRIPTION OF THE DRAWINGS

The advantages of the methods and mechanisms described herein may be better understood by referring to the following description in conjunction with the accompanying drawings, in which:
FIG. 1 is a block diagram of one embodiment of a computing system.
FIG. 2 is a block diagram of one embodiment of a GPU.
FIG. 3 is a block diagram of one embodiment of a set of vector general purpose registers (VGPRs).
FIG. 4 illustrates one embodiment of an example wavefront and an example instruction sequence.
FIG. 5 illustrates a diagram of one embodiment of a first mode of operation for a processor.
FIG. 6 illustrates a diagram of one embodiment of a second mode of operation for a processor.
FIG. 7 is a generalized flow diagram illustrating one embodiment of a method for scheduling instructions on a processor.
FIG. 8 is a generalized flow diagram illustrating one embodiment of a method for determining which operating mode to use in a parallel processor.
FIG. 9 is a generalized flow diagram illustrating one embodiment of a method for utilizing different operating modes for a parallel processor.
FIG. 10 is a block diagram of one embodiment of a software architecture of the computing system of FIG. 1.
FIG. 11 is a generalized flow diagram illustrating one embodiment of a method for generating a modified shader program for dynamically controlling an operating mode of a processor on a program section-by-section basis.
FIG. 12 illustrates a diagram of one embodiment of a register use analysis of a shader program.
FIG. 13 illustrates a diagram of one embodiment of modification of a shader program to implement subvector looping for a section of a shader program.
FIG. 14 illustrates a diagram of another embodiment of modification of a shader program to implement subvector looping for a section of a shader program.
FIG. 15 illustrates a diagram of yet another embodiment of modification of a shader program to implement subvector looping for a section of a shader program.

### DETAILED DESCRIPTION

In the following description, numerous specific details are set forth to provide a thorough understanding of the methods and mechanisms presented herein. However, one having ordinary skill in the art should recognize that the various embodiments may be practiced without these specific details. In some instances, well-known structures, components, signals, computer program instructions, and techniques have not been shown in detail to avoid obscuring the approaches described herein. It will be appreciated that for simplicity and clarity of illustration, elements shown in the figures have not necessarily been drawn to scale. For example, the dimensions of some of the elements may be exaggerated relative to other elements.

Various systems, apparatuses, methods, and computer-readable media for processing variable wavefront sizes on a processor are disclosed. When operating in a first mode, the processor executes the same instruction on multiple portions of a wavefront before proceeding to the next instruction of the shader program. When operating in a second mode, the processor executes a set of instructions on a first portion of a wavefront and when the processor finishes executing the set of instructions on the first portion of the wavefront, the processor executes the set of instructions on a second portion of the wavefront, and so on until all portions of the wavefront have been processed. Then, the processor continues executing subsequent instructions of the shader program.

In one embodiment, an indication is declared within the code sequence, with the indication specifying which mode to utilize for a given region of the program. In another embodiment, a compiler generates the indication when generating executable code, with the indication specifying the processor operating mode. In another embodiment, the processor includes a control unit which determines the processor operating mode.

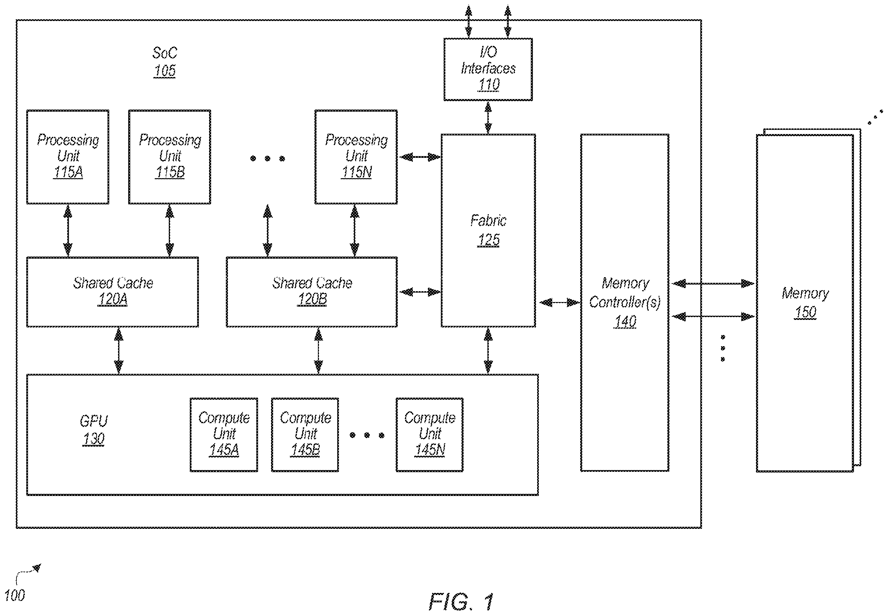

Referring now to FIG. 1, a block diagram of one embodiment of a computing system 100 is shown. In one embodiment, computing system 100 includes system on chip (SoC) 105 coupled to memory 150. SoC 105 can also be referred to as an integrated circuit (IC). In one embodiment, SoC 105 includes processing units 115AN, input/output (I/O) interfaces 110, shared caches 120A-B, fabric 125, graphics processing unit (GPU) 130, and memory controller(s) 140. SoC 105 can also include other components not shown in FIG. 1 to avoid obscuring the figure. Processing units 115A-N are representative of any number and type of processing units. In one embodiment, processing units 115A-N are central processing unit (CPU) cores. In another embodiment, one or more of processing units 115A-N are other types of processing units (e.g., application specific integrated circuit (ASIC), field programmable gate array (FPGA), digital signal processor (DSP)). Processing units 115A-N are coupled to shared caches 120A-B and fabric 125.

In one embodiment, processing units 115A-N are configured to execute instructions of a particular instruction set architecture (ISA). Each processing unit 115A-N includes one or more execution units, cache memories, schedulers, branch prediction circuits, and so forth. In one embodiment, the processing units 115A-N are configured to execute the main control software of system 100, such as an operating system. Generally, software executed by processing units 115A-N during use can control the other components of system 100 to realize the desired functionality of system 100. Processing units 115A-N can also execute other software, such as application programs.

GPU 130 includes at least compute units 145A-N which are representative of any number and type of compute units that are used for graphics or general-purpose processing. Compute units 145A-N can also be referred to as "shader arrays", "shader engines", "single instruction multiple data (SIMD) units", or "SIMD cores". Each compute unit 145A-N includes a plurality of execution units. GPU 130 is coupled to shared caches 120A-B and fabric 125. In one embodiment, GPU 130 is configured to execute graphics pipeline operations such as draw commands, pixel operations, geometric computations, and other operations for rendering an image to a display. In another embodiment, GPU 130 is configured to execute operations unrelated to graphics. In a further embodiment, GPU 130 is configured to execute both graphics operations and non-graphics related operations.

GPU 130 is configured to receive instructions of a shader program and wavefronts for execution. In one embodiment, GPU 130 is configured to operate in different modes. In one embodiment, the number of work-items in each wavefront is greater than the number of execution units in GPU 130.

In one embodiment, GPU 130 schedules a first instruction for execution on first and second portions of a first wavefront prior to scheduling a second instruction for execution on the first portion of the first wavefront responsive to detecting a first indication. GPU 130 follows this pattern for the other instructions of the shader program and for other wavefronts as long as the first indication is detected. It is noted that "scheduling an instruction" can also be referred to as "issuing an instruction". Depending on the embodiment, the first indication can be specified in software, or the first indication can be generated by GPU 130 based on one or more operating conditions. In one embodiment, the first indication is a command for GPU 130 to operate in a first mode.

In one embodiment, GPU 130 schedules the first instruction and the second instruction for execution on the first portion of the first wavefront prior to scheduling the first instruction for execution on the second portion of the first wavefront responsive to not detecting the first indication. GPU 130 follows this pattern for the other instructions of the shader program and for other wavefronts as long as the first indication is not detected.

I/O interfaces 110 are coupled to fabric 125, and I/O interfaces 110 are representative of any number and type of interfaces (e.g., peripheral component interconnect (PCI) bus, PCI-Extended (PCI-X), PCIE (PCI Express) bus, gigabit Ethernet (GBE) bus, universal serial bus (USB)). Various types of peripheral devices can be coupled to I/O interfaces 110. Such peripheral devices include (but are not limited to) displays, keyboards, mice, printers, scanners, joysticks or other types of game controllers, media recording devices, external storage devices, network interface cards, and so forth.

SoC 105 is coupled to memory 150, which includes one or more memory modules. Each of the memory modules includes one or more memory devices mounted thereon. In some embodiments, memory 150 includes one or more memory devices mounted on a motherboard or other carrier upon which SoC 105 is also mounted. The RAM implemented can be static RAM (SRAM), dynamic RAM (DRAM), Resistive RAM (ReRAM), Phase Change RAM (PCRAM), or any other volatile or non-volatile RAM. The type of DRAM that is used to implement memory 150 includes (but is not limited to) double data rate (DDR) DRAM, DDR2 DRAM, DDR3 DRAM, and so forth. Although not explicitly shown in FIG. 1, SoC 105 can also include one or more cache memories that are internal to the processing units 115A-N and/or compute units 145A-N. In some embodiments, SoC 105 includes shared caches 120A-B that are utilized by processing units 115A-N and compute units 145A-N. In one embodiment, caches 120A-B are part of a cache subsystem including a cache controller.

In various embodiments, computing system 100 can be a computer, laptop, mobile device, server or any of various other types of computing systems or devices. It is noted that the number of components of computing system 100 and/or SoC 105 can vary from embodiment to embodiment. There can be more or fewer of each component/subcomponent than the number shown in FIG. 1. For example, in another embodiment, SoC 105 can include multiple memory controllers coupled to multiple memories. It is also noted that computing system 100 and/or SoC 105 can include other components not shown in FIG. 1. Additionally, in other embodiments, computing system 100 and SoC 105 can be structured in other ways than shown in FIG. 1.

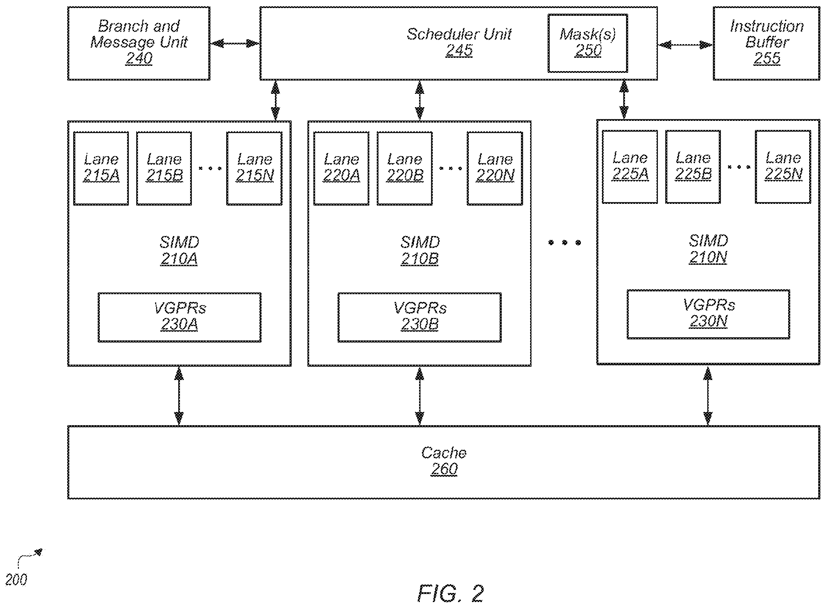

Turning now to FIG. 2, a block diagram of one embodiment of a graphics processing unit (GPU) 200 is shown. In one embodiment, GPU 200 includes at least SIMDs 210A-N, branch and message unit 240, scheduler unit 245, instruction buffer 255, and cache 260. It is noted that GPU 200 can also include other logic which is not shown in FIG. 2 to avoid obscuring the figure. It is also noted that other processors (e.g., FPGAs, ASICs, DSPs) can include the circuitry shown in GPU 200.

In one embodiment, GPU 200 is configured to operate in different modes to process instructions of a shader program on wavefronts of different sizes. GPU 200 utilizes a given mode to optimize performance, power consumption, and/or other factors depending on the type of workload being processed and/or the number of work-items in each wavefront. In one embodiment, each wavefront includes a number of work-items which is greater than the number of lanes 215A-N, 220A-N, and 225AN in SIMDs 210A-N. In this embodiment, GPU 200 processes the wavefronts differently based on the operating mode of GPU 200. In another embodiment, GPU 200 processes the wavefronts differently based on one or more detected conditions. Each lane 215A-N, 220A-N, and 225A-N of SIMDs 210A-N can also be referred to as an "execution unit".

In one embodiment, GPU 200 receives a plurality of instructions for a wavefront with a number of work-items which is greater than the total number of lanes in SIMDs 210A-N. In this embodiment, GPU 200 executes a first instruction on multiple portions of a wavefront before proceeding to the second instruction when GPU 200 is in a first mode. GPU 200 continues with this pattern of execution for subsequent instructions for as long as GPU 200 is in the first mode. In one embodiment, the first mode can be specified by a software-generated declaration. If GPU 200 is in a second mode, then GPU 200 executes multiple instructions on a first portion of the wavefront before proceeding to the second portion of the wavefront. When GPU 200 is in the second mode, GPU 200 shares a portion of vector general purpose registers (VGPRs) 230AN between different portions of the wavefront. Additionally, when GPU 200 is in the second mode, if an execution mask of mask(s) 250 indicates that a given portion of the wavefront is temporarily masked out, then GPU 200 does not execute the instruction for the given portion of the wavefront.

In another embodiment, if the wavefront size is greater than the number of SIMDs, GPU 200 determines the cache miss rate of cache 260 for the program. If the cache miss rate is less than a threshold, then GPU 200 executes a first instruction on multiple portions of a wavefront before proceeding to the second instruction. GPU 200 continues with this pattern of execution for subsequent instructions for as long as the cache miss rate is determined or predicted to be less than the threshold. The threshold can be specified as a number of bytes, as a percentage of cache 260, or as any other suitable metric. If the cache miss rate is greater than or equal to the threshold, then GPU 200 executes multiple instructions on a first portion of the wavefront before executing the multiple instructions on the second portion of the wavefront. Additionally, if the cache miss rate is greater than or equal to the threshold, GPU 200 shares a portion of vector general purpose registers (VGPRs) 230A-N between different portions of the wavefront, and GPU 200 skips instructions for the given portion of the wavefront if the execution mask indicates the given portion is masked out.

It is noted that the letter "N" when displayed herein next to various structures is meant to generically indicate any number of elements for that structure (e.g., any number of SIMDs 210A-N). Additionally, different references within FIG. 2 that use the letter "N" (e.g., SIMDs 210A-N and lanes 215A-N) are not intended to indicate that equal numbers of the different elements are provided (e.g., the number of SIMDs 210A-N can differ from the number of lanes 215A-N).

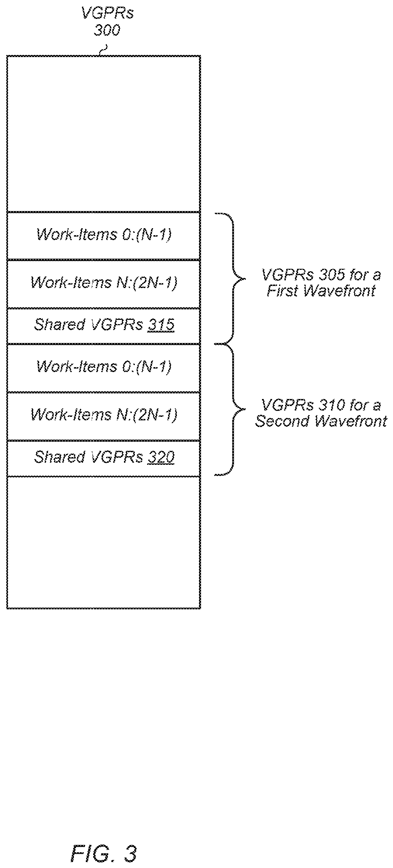

Referring now to FIG. 3, a block diagram of one embodiment of a set of vector general purpose registers (VGPRs) 300 is shown. In one embodiment, VGPRs 300 are included in SIMDs 210A-N of GPU 200 (of FIG. 2). VGPRs 300 can include any number of registers, depending on the embodiment.

As shown in FIG. 3, VGPRs 300 includes VGPRs 305 for a first wavefront, VGPRs 310 for a second wavefront, and any number of other VGPRs for other numbers of wavefronts. It is assumed for the purposes of this discussion that the first and second wavefronts have 2*N number of work-items, with N being a positive integer, and with N varying from embodiment to embodiment. In one embodiment, N is equal to 32. VGPRs 305 includes a region with private VGPRs and a shared VGPR region 315. Similarly, VGPRs 310 includes a region with private VGPRs and a shared VGPR region 320.

In one embodiment, if the host GPU (e.g., GPU 200) is in a first mode, then shared VGPRs 315 and shared VGPRs 310 are not shared between different portions of the first and second wavefronts, respectively. However, when the host GPU is in a second mode, then shared VGPRs 315 and shared VGPRs 310 are shared between different portions of the first and second wavefronts, respectively. In other embodiments, the implementation of sharing or not sharing is based on the detection of a first indication rather than being based on a first mode or second mode. The first indication can be generated by software, generated based on cache miss rate, or generated based on one or more other operating conditions.

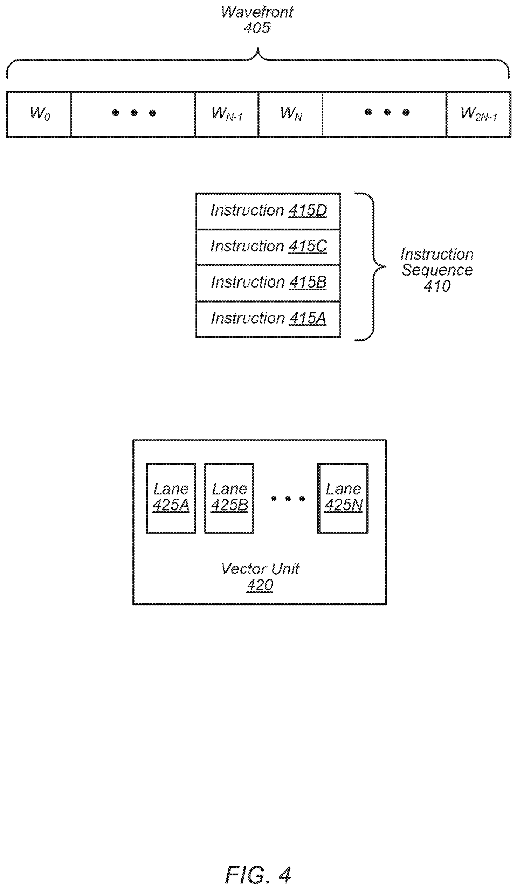

Turning now to FIG. 4, one embodiment of an example wavefront 405 and an example instruction sequence 410 are shown. Wavefront 405 is intended to illustrate one example of a wavefront in accordance with one embodiment. Wavefront 405 includes 2*N number of work-items, wherein "N" is a positive integer, and wherein "N" is the number of lanes 425A-N in vector unit 420. Vector unit 420 can also be referred to as a SIMD unit or a parallel processor. The first portion of wavefront 405 includes work-items WO through WN-1, and the second portion of wavefront 405 includes work-items WN through W2N-1. A single portion of wavefront 405 is intended to execute on lanes 425A-N of vector unit 420 in a given instruction cycle. In other embodiments, wavefront 405 can include other numbers of portions.

In one embodiment, N is 32, and the number of work-items per wavefront is 64. In other embodiments, N can be other values. In the embodiment when N is 32, vector unit 420 also includes 32 lanes which are shown as lanes 425A-N. In other embodiments, vector unit 420 can include other numbers of lanes.

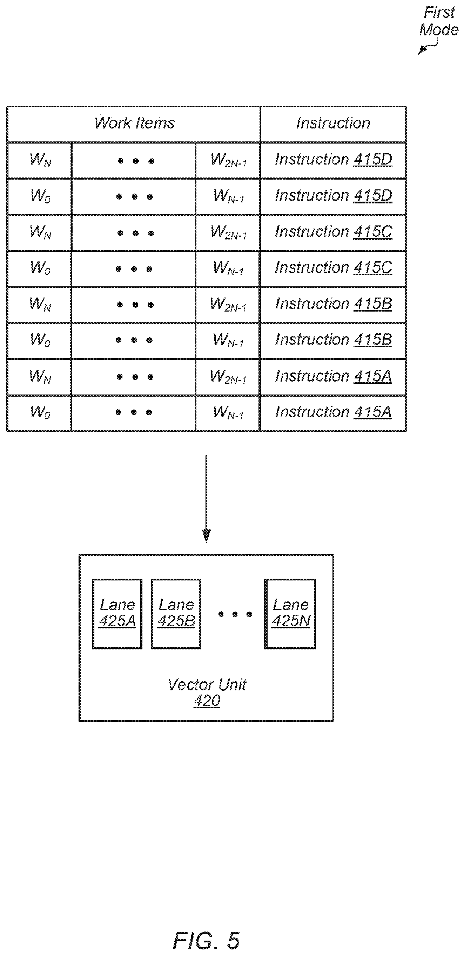

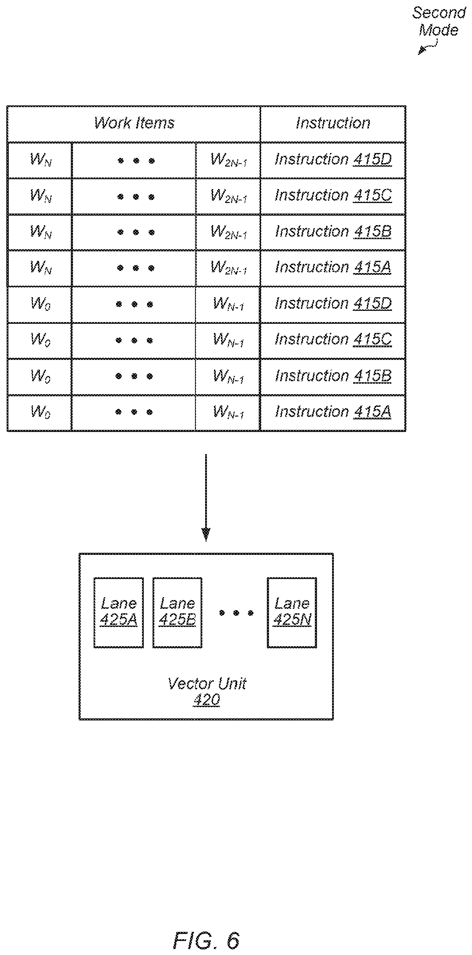

Instruction sequence 410 is illustrative of one example of an instruction sequence. As shown in FIG. 4, instruction sequence 410 includes instructions 415A-D, which are representative of any number and type of instructions of a shader program. It should be assumed for the purposes of this discussion that instruction 415A is the first instruction of instruction sequence 410, with instruction 415B the second instruction, instruction 415C the third instruction, and instruction 415D the fourth instruction. In other embodiments, an instruction sequence can have other numbers of instructions. Wavefront 405, instruction sequence 410, and vector unit 420 are reused during the discussion that continues for FIG. 5 and FIG. 6 below.

Referring now to FIG. 5, a diagram of one embodiment of a first mode of operation for a processor is shown. The discussion of FIG. 5 is a continuation of the discussion regarding FIG. 4. In one embodiment, the size of a wavefront is twice the size of vector unit 420. In another embodiment, the size of a wavefront is an integer multiple of the size of vector unit 420. In these embodiments, a processor can implement different modes of operation for determining how to execute the work-items of the wavefront using vector unit 420.

In a first mode of operation, each instruction is executed on different subsets of the wavefront before the next instruction is executed on the different subsets. For example, instruction 415A is executed for the first half (i.e., work-items WO through WN-1) of the wavefront during a first instruction cycle on lanes 425A-N of vector unit 420, and then instruction 415A is executed for the second half (i.e., work-items WN through W2N-1) of the first wavefront during a second instruction cycle on lanes 425A-N. For example, during the first instruction cycle, work-item WO can execute on lane 425A, work-item W1 can execute on lane 425B, and so on.

Then, instruction 415B is executed for the first half of the wavefront during a third instruction cycle on lanes 425A-N, and then instruction 415B is executed for the second half of the wavefront during a fourth instruction cycle on lanes 425A-N. Next, instruction 415C is executed for the first half of the wavefront during a fifth instruction cycle on lanes 425A-N, and then instruction 415C is executed for the second half of the wavefront during a sixth instruction cycle on lanes 425A-N. Then, instruction 415D is executed for the first half of the wavefront on lanes 425A-N of vector unit 420 during a seventh instruction cycle on lanes 425A-N, and then instruction 415D is executed for the second half of the wavefront on lanes 425A-N of vector unit 420 during an eighth instruction cycle on lanes 425A-N. For the purposes of this discussion, it can be assumed that the second instruction cycle follows the first instruction cycle, the third instruction cycle follows the second instruction cycle, and so on.

Turning now to FIG. 6, a diagram of one embodiment of a second mode of operation for a processor is shown. The discussion of FIG. 6 a continuation of the discussion regarding FIG. 5. In the second mode of operation, the entire instruction sequence 410 is executed on the same portion of the wavefront before the entire instruction sequence 410 is executed on the next portion of the wavefront.

For example, in a first instruction cycle, instruction 415A is executed for the first half (i.e., work-items WO through WN-1) of the wavefront on lanes 425A-N of vector unit 420. Then, in a second instruction cycle, instruction 415B is executed for the first half of the wavefront on lanes 425A-N. Next, in a third instruction cycle, instruction 415C is executed for the first half of the wavefront on lanes 425A-N. Then, in a fourth instruction cycle, instruction 415D is executed for the first half of the wavefront on lanes 425A-N.

Next, instruction sequence 410 is executed on the second half of the wavefront. Accordingly, in a fifth instruction cycle, instruction 415A is executed for the second half (i.e., work-items WN through W2N-1) of the wavefront on lanes 425A-N of vector unit 420. Then, in a sixth instruction cycle, instruction 415B is executed for the second half of the wavefront on lanes 425A-N. Next, in a seventh instruction cycle, instruction 415C is executed for the second half of the wavefront on lanes 425A-N. Then, in an eighth instruction cycle, instruction 415D is executed for the second half of the wavefront on lanes 425A-N.

In another embodiment, if a wavefront had 4*N work-items, instruction sequence 410 could be executed on the first quarter of the wavefront, then instruction sequence 410 could be executed on the second quarter of the wavefront, followed by the third quarter and then the fourth quarter of the wavefront. Other wavefronts of other sizes and/or vector units with other numbers of lanes could be utilized in a similar manner for the second mode of operation.

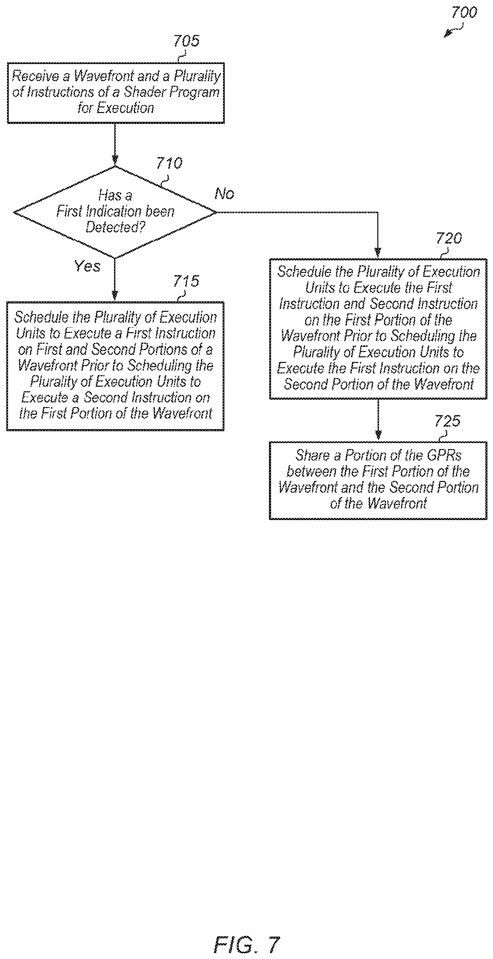

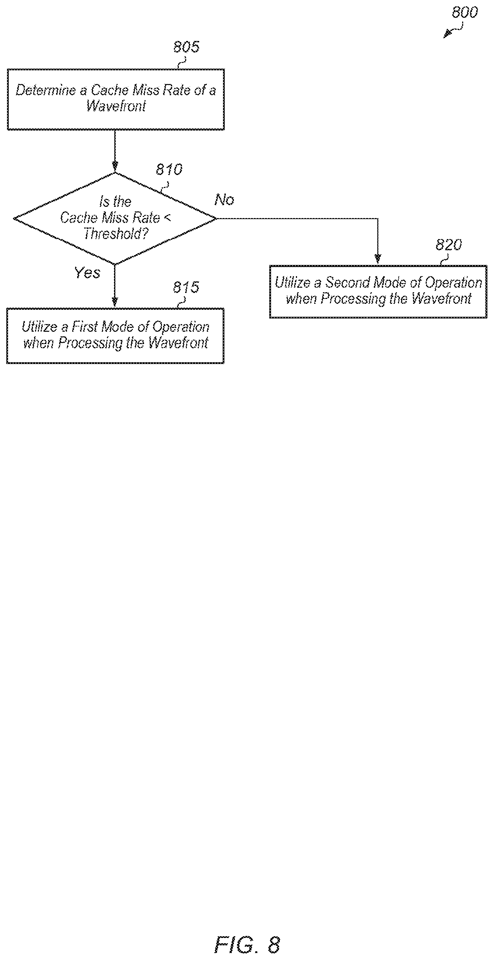

Referring now to FIG. 7, one embodiment of a method 700 for scheduling instructions on a processor is shown. For purposes of discussion, the steps in this embodiment and those of FIG. 8-9 are shown in sequential order. However, it is noted that in various embodiments of the described methods, one or more of the elements described are performed concurrently, in a different order than shown, or are omitted entirely. Other additional elements are also performed as desired. Any of the various systems, apparatuses, or computing devices described herein are configured to implement method 700.

A processor receives a wavefront and a plurality of instructions of a shader program for execution (block 705). In one embodiment, the processor includes at least a plurality of execution units, a scheduler, a cache, and a plurality of GPRs. In one embodiment, the processor is a GPU. In other embodiments, the processor is any of various other types of processors ((e.g., DSP, FPGA, ASIC, multi-core processor). In one embodiment, the number of work-items in the wavefront is greater than the number of execution units of the processor. For example, in one embodiment, the wavefront includes 64 work-items and the processor includes 32 execution units. In this embodiment, the number of work-items in the wavefront is equal to twice the number of execution units. In other embodiments, the wavefront can include other numbers of work-items and/or the processor can include other numbers of execution units. In some cases, the processor receives a plurality of wavefronts for execution. In these cases, method 700 can be implemented multiple times for the multiple wavefronts.

Next, the processor determines if a first indication has been detected (conditional block 710). In one embodiment, the first indication is a setting or parameter declared within a software instruction, with the setting or parameter specifying the operating mode for the processor to utilize. In another embodiment, the first indication is generated based on a cache miss rate of the wavefront. In other embodiments, other types of indications are possible and are contemplated.

If the first indication is detected (conditional block 710, "yes" leg), then the processor schedules the plurality of execution units to execute a first instruction on first and second portions of a wavefront prior to scheduling the plurality of execution units to execute a second instruction on the first portion of the wavefront (block 715). The processor can follow this same pattern of scheduling instruction for the remainder of the plurality of instructions, as long as the first indication is detected. If the first indication is not detected (conditional block 710, "no" leg), then the processor schedules the plurality of execution units to execute the first instruction and the second instruction on the first portion of the wavefront prior to scheduling the plurality of execution units to execute the first instruction on the second portion of the wavefront (block 720). The processor can follow this same pattern of scheduling instruction for the remainder of the plurality of instructions, as long as the first indication is not detected. Also, the processor shares a portion of the GPRs between the first portion of the wavefront and the second portion of the wavefront if the first indication is not detected (block 725). After blocks 715 and 725, method 700 ends.

Turning now to FIG. 8, one embodiment of a method 800 for determining which operating mode to use in a parallel processor is shown. A control unit of a processor determines a cache miss rate of a wavefront (block 805). Depending on the embodiment, the control unit can determine the cache miss rate of a portion of the wavefront or of the entirety of the wavefront in block 805. Depending on the embodiment, the control unit is implemented using any suitable combination of hardware and/or software. In one embodiment, the control unit predicts a cache miss rate of the wavefront. In another embodiment, the control unit receives an indication generated by software, with the indication specifying the cache miss rate of the wavefront. Next, the control unit determines if the cache miss rate of the wavefront is less than a threshold (conditional block 810). Alternatively, if the control unit receives an indication generated by software, the indication can specify if the cache miss rate is less than the threshold. In one embodiment, the threshold is programmable. In another embodiment, the threshold is predetermined.

If the cache miss rate of the wavefront is less than a threshold (conditional block 810, "yes" leg), then the processor utilizes a first mode of operation when processing the wavefront (block 815). In one embodiment, the first mode of operation involves issuing each instruction on all portions of the wavefront before moving on to the next instruction in the shader program. If the cache miss rate of the wavefront is greater than or equal to the threshold (conditional block 810, "no" leg), then the processor utilizes a second mode of operation when processing the wavefront (block 820). In one embodiment, the second mode of operation involves executing a set of instructions on a first portion of the wavefront, then executing the same set of instructions on a second portion of the wavefront, and so on, until all portions of the wavefront have been processed. After blocks 815 and 820, method 800 ends.

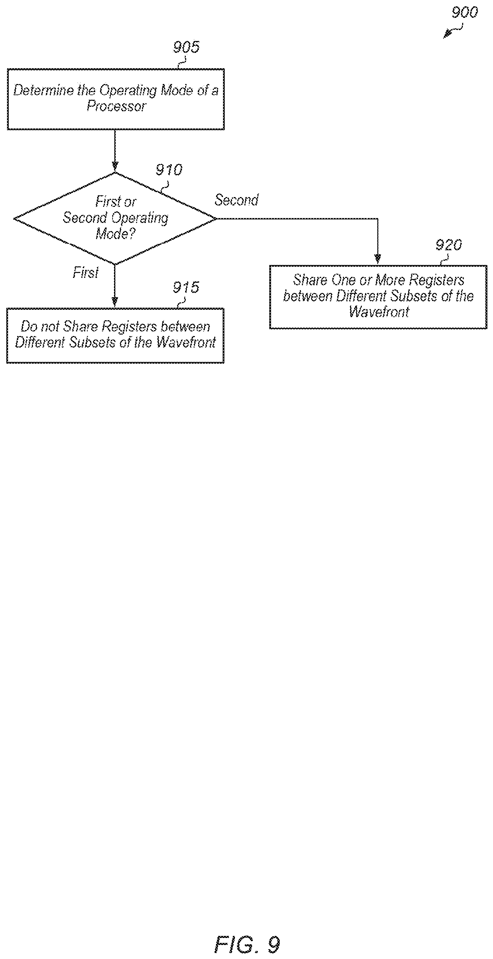

Referring now to FIG. 9, another embodiment of a method 900 for utilizing different operating modes for a parallel processor is shown. A control unit of a processor determines the operating mode of the processor (block 905). Depending on the embodiment, the control unit is implemented using any suitable combination of hardware and/or software. The criteria the control unit utilizes to determine which operating mode to select can vary from embodiment to embodiment. One example of criteria that can be utilized is described in FIG. 8 in the discussion regarding method 800. Other examples of criteria that can be utilized for selecting the processor operating mode are possible and are contemplated.

If the control unit selects a first operating mode (conditional block 910, "first" leg), then the processor does not share registers between different subsets of the wavefront being processed by the processor (block 915). Otherwise, if the control unit selects a second operating mode (conditional block 910, "second" leg), then the control unit shares one or more registers between different subsets of the wavefront being processed by the processor (block 920). For example, in one embodiment, sharing registers involves the processor using a shared portion of a register file for a first portion of a wavefront for a first set of instructions. Then, the processor reuses the shared portion of the register file for a second portion of the wavefront. If the wavefront has more than two portions, then the processor reuses the shared portion of the register file for the additional portions of the wavefront. After block 920, method 900 ends.

It is noted that in some embodiments, a processor can have more than two operating modes. In these embodiments, conditional block 910 can be applied such that a first subset (e.g., first mode, third mode, seventh mode) of operating modes follow the "first" leg and a second subset (e.g., second mode, fourth mode, fifth mode, sixth mode) of operating modes follow the "second" leg shown in FIG. 7. Alternatively, in another embodiment, the size of the portion of the register file that is shared can vary according to different operating modes. For example, for a second mode, a first number of registers are shared, for a third mode, a second number of registers are shared, for a fourth mode, a third number of GPRs are shared, and so on.

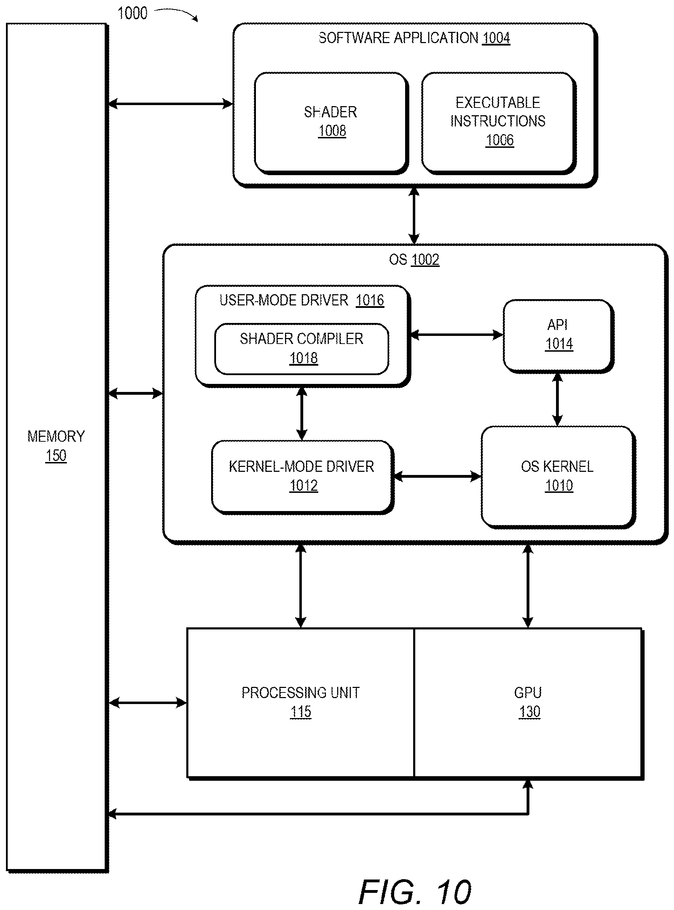

Referring now to FIGs. 10-15, embodiments of a computing system in which a shader program is analyzed for register usage on a program section-by-section basis and then modified so as to control the mode of operation of a GPU of the computing system for each program section based on its register usage are disclosed. In at least one embodiment, the computing system employs a compiler at a CPU or other processing unit to analyze each section of some or all of a shader program to determine the number of VGPRs expected to be required to execute the corresponding section for an entire wavefront (that is, for all work-items of the wavefront). For each section identified as expected to require a number of VGPRs that does not exceed a specified threshold, the compiler refrains from modifying the shader program so that the section is executed by a GPU of the computing system in a mode in which the GPU schedules its execution units to execute each instruction for every portion of the wavefront (that is, the entire wavefront) before executing a next instruction for every portion of the wavefront, as described above. For each section identified as expected to require a number of VGPRs that exceeds a specified threshold, the compiler modifies the shader program so that the section is executed by the GPU in a different mode in which the GPU schedules its execution units to execute a set of instructions (that is, two or more instructions) of the shader program for a first portion of the wavefront prior to scheduling the execution units to execute this same set of instructions for a second portion of the same wavefront, as also described above. If the wavefront is composed of more than two portions, during this mode the GPU schedules its execution units to then execute the set of instructions for a third portion of the wavefront after scheduling the execution units for the second portion of the wavefront, and so forth. For ease of reference, the former mode is referred to below as the "regular mode" (identified in the preceding description for FIGs. 1-9 as the "first mode") and the latter mode is referred to below as the "subvector looping mode" (identified in the preceding description of FIGs. 1-9 as "the second mode"). The sections of the shader program employed in this technique may constitute individual instructions, logical sequences or blocks of instructions (e.g., an instruction loop or a subroutine), and the like. The specified threshold applied to the register usage of each section for determining the mode of operation to be employed for executing the section, in one embodiment, is based on the number of VGPRs available for use at each execution unit.

Referring to FIG. 10, an example software architecture 1000 employed in the computing system 100 of FIG. 1 for dynamic subvector looping is shown. Software architecture 1000 includes operating system (OS) 1002 that supports execution of one or more software applications 1004 by one or more of processing units 115 (e.g., a CPU) and GPU 130 in concert. OS 1002 and software application 1004 typically are resident in system memory 150, as is much of the data utilized by processing unit 115 and some of the data utilized by GPU 130.

Software application 1004 includes one or more sets of executable instructions 1006 as well as one or more shader programs 1008. The set of executable instructions 1006 represent one or more programs that have been compiled into machine language code suitable for execution at the processing unit 115. Each shader program 1008 (also commonly known as a "compute kernel" or simply a "shader") is a program representing a task or workload intended to be executed at least partially by GPU 130, and typically with multiple instances of shader program 1008 being executed in parallel by two or more of compute units 145 (FIG. 1) of the GPU 130. Such shader programs may be graphics-related, such as pixel shaders, vertex shaders, geometry shaders, tessellation shaders, and the like, or may be machine learning (ML) shaders or other general compute shaders.

OS 1002 includes an OS kernel 1010, one or more kernel-mode drivers 1012, one or more application programming interfaces (APIs) 1014, and one or more user-mode drivers 1016. OS kernel 1010 represents the functional core of OS 1002 and is responsible for boot initialization, memory allocation/deallocation, input/output control, and other fundamental hardware controls, as well as facilitating execution of software application 1004. Kernel-mode driver 1012 manages the general operation of the hardware of GPU 130, including initialization of GPU 130, setting display modes, managing mouse hardware, managing allocation/deallocation of physical memory for GPU 130, managing the command buffer (not shown) in the system memory 150 that facilitate tasking of commands from processing unit 115 to GPU 130, and the like.

User-mode driver 1016 operates as the interface to GPU 130 for one or more shader programs 1008 of software application 1004. However, to facilitate hardware abstraction, shader program 1008 typically is not implemented in software application 1004 as machine readable code (i.e., "native" code), but rather as source code (that is, in a human readable syntax), such as OpenGL (TM) Shading Language (GLSL) or High Level Shading Language (HLSL) syntax, or in partially compiled bytecode, such as the Standard Portable Intermediate Representation (SPIR) bytecode format, and which rely on one or more APIs 1014, such as an OpenCL (TM) API, an OpenGL (TM) API, a Direct3D (TM) API, a CUDA (TM) API, and the like, and their associated libraries. As shader program 1008 is not in native code format, user-mode driver 1016 employs a shader compiler 1018 that operates to perform run time compilation (also known as real time compilation or just-in-time (JIT) compilation) of the source code or bytecode representation of shader program 1008 to machine readable code executable by GPU 130. In other embodiments, an offline compiler is employed to compile the code representing shader program 1008 into executable native code. The compiled executable code representation of shader program 1008 is then provided by the user-mode driver 1016 to GPU 130 via a command buffer (not shown) implemented in the system memory 150 and managed by, for example, the scheduler unit 245 (FIG. 2).

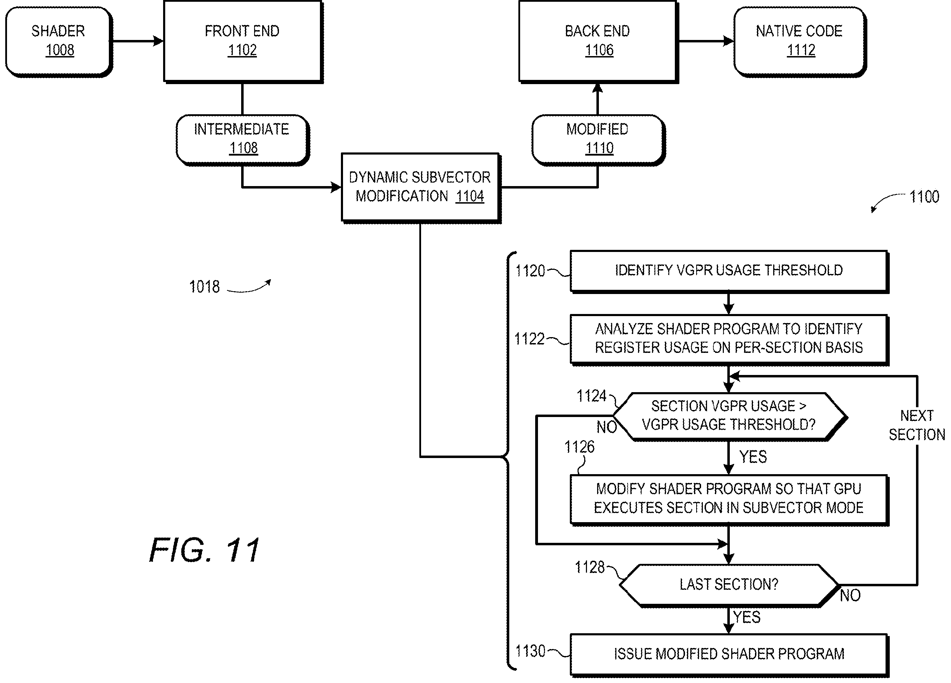

Referring now to FIG. 11, an example implementation of shader compiler 1018 and an example method 1100 of its operation for modifying shader program 1008 to implement software-controlled dynamic subvector looping is shown. In the depicted implementation, shader compiler 1018 includes a set of instructions to manipulate the processing unit 115 to perform a set of tasks when executed, with this set of tasks logically organized as a front end stage 1102, a dynamic subvector modification stage 1104, and a back end stage 1106. Shader program 1008 is provided to front end stage 1102 in the form of human-readable source code or in partially compiled byte-code, depending on implementation. Front end stage 1102 performs one or more initial preparatory processes, such as lexical, syntactic, and semantic analyses, and then generates an intermediate representation 1108 of shader program 1008, which may include, for example, converting the human-readable source code to byte code or converting from a higher-level shader language to a lower-level shader language. At subvector modification stage 1104, shader compiler 1018 applies one or more register use analysis techniques to identify register usage on a section-by-section basis and then modifies intermediate representation 1108 of shader program 1008 to implement software-controlled selective implementation of the subvector loop on a section-by-section basis, and thereby generating a modified representation 1110 of the shader program 1008. This processes is described in detail below with reference to method 1100. Modified representation 1110 is then processed by back end stage 1106, which translates the modified representation 1110 to one or more shader objects represented in the machine language of GPU 130 and links the one or more objects so as to create an executable machine-language representation of the modified shader program, identified herein as "native code shader 1112". Native code shader 1112 then may be passed on to GPU 130 via a command buffer in memory 150, whereupon the one or more compute units 145 execute the executable shader representation, that is, native code shader 1112, in parallel.

As explained above, the number of work-items in a wavefront may outnumber the number of execution units in the SIMD cores of GPU 130, making scheduling of instructions of the wavefront difficult. Likewise, in some implementations, a wavefront may operate on a data structure, such as a vertex buffer or other array of structures, that is larger than the cache allocated to store the data of the data structure, which can result in significant cache thrashing and thus inefficient execution performance, when GPU 130 attempts to schedule an entire wavefront for execution in parallel. Thus, as explained above and further explained below, GPU 130 employs at least two different modes of operation, one of which involves GPU 130 executing each instruction for an entire wavefront in parallel (that is, the "regular mode" or "first mode"), and another mode in which the GPU 130 executes a set of instructions on a portion of a wavefront in parallel, then turns to execution of this same set of instructions on another portion of the wavefront, and so forth (that is, the "subvector looping mode" or "second mode"). In some embodiments, GPU 130 includes a controller or other hardware-based mechanism to independently identify when it would be advantageous to switch from the regular mode of operation to the subvector looping mode of operation, and vice versa. However, in other embodiments, this mode selection process is implemented instead at compile time, and thus providing software-implemented dynamic mode switching so as to better optimize execution of different sections of the shader program. Method 1100 of FIG. 11 illustrates an example implementation of such a software-based technique.

As described below, in some embodiments, method 1100 relies on comparison of VGPR usage of each section of shader program 1008 to a specified VGPR usage to determine whether to implement the subvector looping mode to execute the corresponding section. Accordingly, as part of initialization, at block 1120, computing system 100 identifies the specified VGPR usage threshold to be employed. In one embodiment, the VGPR usage threshold has been previously identified and fixed, such as by setting the VGPR usage threshold as a constant in the code implementing the shader compiler 1018, by programming a fuse or one-time-programmable element, and the like. In other embodiments, the VGPR usage threshold is user-programmable or otherwise programmable, such as via programming of a guest-accessible register. In still other embodiments, the computing system 100 identifies or calculates the VGPR usage threshold dynamically for each iteration of method 1100. In any of these approaches, the VGPR usage may be set based on the maximum number of VGPRs available to each execution unit. For example, assume that each execution unit has available 12 dedicated VGPRs. In this example, the VGPR usage threshold may be set to equal to this number of dedicated VGPRs (that is, VGPR usage threshold = 12 VGPRs), or set to some fixed percentage, and the like.

At block 1122, dynamic subvector modification state 1104 of shader compiler 1018 analyzes intermediate representation 1108 of shader program 1008 (or in some instances, shader program 1008 itself) to identify the expected VGPR usage for each section of shader program 1008 on a section-by-section basis. To this end, shader program 1008 (or intermediate representation 1108 thereof) can be logically segmented into a plurality of sections using any of a variety of criteria, or combination of criteria. For example, all of the instructions of a loop may be designated together as a single section, as may the instructions of a subroutine or function call. Similarly, for instructions not included in a loop or a subroutine, a section may be designated based on a specified number of instructions in sequence. In still other embodiments, a section may be identified as all instructions occurring between an instance where VGPR usage by shader program 1008 exceeds the VGPR usage threshold and the next instance where the VGPR usage then falls below the VGPR usage threshold (that is, sections may be defined relative to VGPR usage and the VGPR usage threshold). VGPR usage by shader program 1008 at any given point in the instruction sequence or for any given section may be determined using any of a variety of techniques. For example, in some embodiments, shader compiler 1018 determines VGPR usage using any of a variety of well-known or proprietary register "liveness" analysis techniques (also commonly referred to as "live variable analysis").

At block 1124, shader compiler 1018 compares the VGPR usage for a selected section of the shader program 1008 with the VGPR usage threshold determined at block 1120. If the VGPR usage for the selected section exceeds the VGPR usage threshold, then at block 1126 shader compiler 1018 modifies the shader program 1008 so that when GPU 130 executes the resulting modified shader program (e.g., modified representation 1110 of shader program 1008), the GPU 130 is configured to operate in the subvector looping mode for execution of the instructions of the selected section.

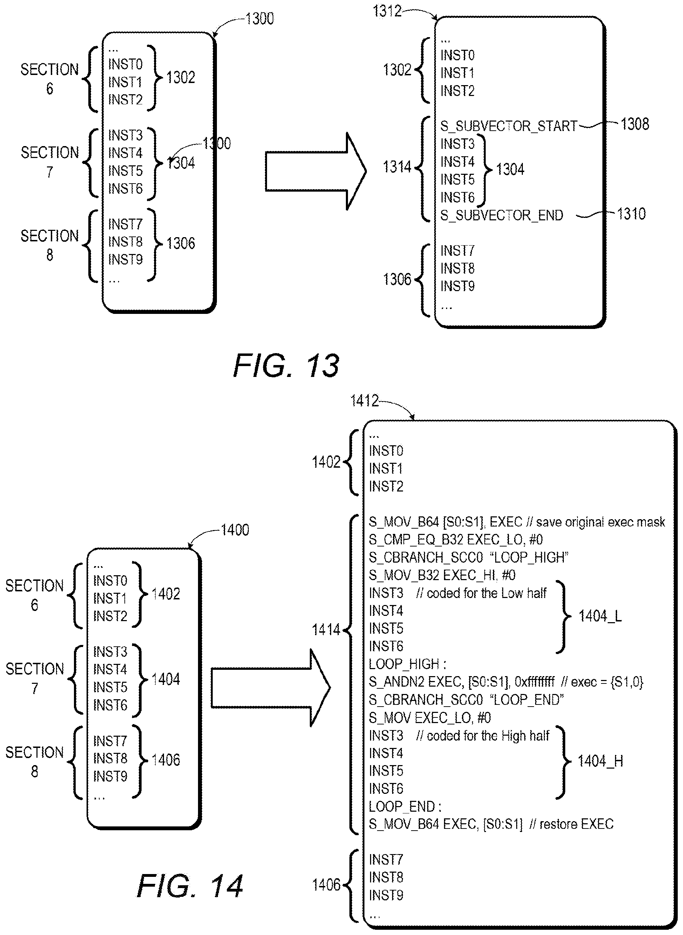

As described below in more detail with reference to FIGs. 13-15, this modification can take any of a variety of forms. In instances whereby GPU 130 provides direct hardware support for the subvector looping mode, the modification of shader program 1008 can include insertion of an first instruction or other command preceding the instructions of the selected section and insertion of a second instruction or other command following the instructions of the selected section, wherein the first and second instructions are part of the ISA of the GPU 130 and, when executed by the GPU 130, configure the GPU 130 to switch to operation in the subvector looping mode and to switch to operation in the regular mode, respectively. In implementations in which GPU 130 does not provide direct hardware support for subvector looping or utilization of such hardware-support is not desired, the modification of shader program 1008 can instead take form of replacing the instructions of the selected section with a set of instructions or code that introduces either a loop that causes the instructions of the selected section to be executed for each portion of the wavefront in turn, or by expressly replicating the instructions of the selected section for each portion of the wavefront. Returning to block 1124, if the VGPR usage of the selected section does not exceed the VGPR usage threshold, then shader compiler 1018 refrains from modifying shader program 1008 for the selected section (and thereby instructing GPU 130 to execute the selected section in the regular mode due to the absence of any modification).

At block 1128 shader compiler 1018 determines whether there are any further sections to consider. If so, shader compiler 1018 selects the next section of shader program 1008 and repeats the process of blocks 1124 and 1126 for the selected section. If not, then at block 1130 shader compiler 1018 issues the resulting modified shader program (as, for example, modified representation 1110) from the dynamic subvector modification stage 1104 to back end stage 1106 for further processing and generation of native code shader 1112 from the modified shader program.

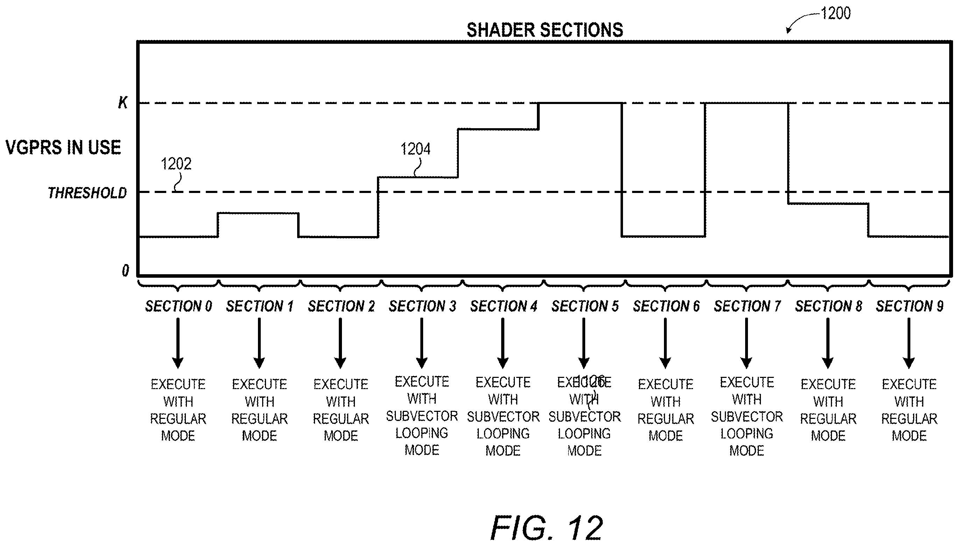

Referring now to FIG. 12, diagram 1200 depicting a simplified example implementation of the method 1100 is shown. The abscissa of diagram 1200 represents a sequence of ten sections of shader program 1008, denoted section 0 through section 9, with section 0 being executed first and section 9 being executed last in the program order of shader program 1008. The ordinate of diagram 1200 represents VGPR usage for each section, with the maximum VGPR usage denoted as "K" and the VGPR usage threshold in this example denoted as horizontal line 1202 (and thus is also referred to herein as "VGPR usage threshold 1202"). As such, line 1204 represents the VGPR usage for sections 0-9, as determined by shader compiler 1018 through variable liveness analysis or other type of register usage analysis of shader program 1008 (block 1122 of method 1100). In this example, sections 0, 1, 2, 6, 8, and 9 do not exceed the VGPR usage threshold 1202, whereas sections 3, 4, 5, and 7 exceed the VGPR usage threshold 1202. Accordingly, during compilation, shader compiler 1018 would modify shader program 1008 so that sections 3, 4, 5, and 7 are executed by GPU 130 using the subvector looping mode, and would refrain from any modification of shader program 1008 with respect to sections 0, 1, 2, 6, 8, and 9 so that these sections are executed by GPU 130 using the regular mode.

As explained above, the modification of shader program 1008 so that a section with VGPR usage above the threshold is executed by GPU 130 using the subvector looping mode may be implemented in any of a variety of ways. Referring to FIG. 13, an ISA-based command modification scheme is shown. In some embodiments, GPU 130 provides hardware-implementation for the subvector looping mode (that is, the hardcoded logic of GPU 130 can implement the multi-pass approach of the subvector looping mode without reconfiguration of the shader program 1008). In such implementations, the shader program 1008 may be modified to switch between regular mode and subvector looping mode through the insertion by the shader compiler 1018 of mode switch instructions into the shader program 1008, whereby these mode switch instructions are part of the ISA of GPU 130 and, when executed by the GPU 130, trigger the GPU 130 to switch modes. To illustrate, block 1300 of FIG. 13 depicts a portion of code of shader program 1008 representing sections 6, 7, and 8 from the example of FIG. 12. Section 6 is represented by a set 1302 of instruction having instructions INST0-INST2, section 7 is represented by a set 1304 of instructions having instructions INST3-INST6, and section 8 is represented by a set 1306 of instructions having instructions INST7-INST9.

In the example of FIG. 12, sections 6 and 8 have VGPR usages that do not exceed the specified VGPR usage threshold 1202 (FIG. 12), whereas section 7 has a VGPR usage that exceeds the specified VGPR usage threshold 1202. Accordingly, in this example the shader compiler 1018 modifies the shader program 1008 so that the set 1304 of instructions representing section 7 are executed in the subvector looping mode by inserting a subvector looping mode entry instruction 1308 (labeled "S_SUBVECTOR_START") prior to the first instruction (INST3) of the set 1304 in program order and inserting a subvector looping mode exit instruction 13010 (labeled "S_SUBVECTOR_START) after the last instruction (INST6) of the set 1304, so as to generate a modified set 1314 of instructions in the resulting modified shader program represented by block 1312. The subvector looping mode entry instruction 1308 is an ISA-supported instruction that, when executed by GPU 130, triggers GPU 130 to operate in the subvector looping mode. Conversely, the subvector looping mode exit instruction 1310 is an ISA-supported instruction that, when executed by GPU 130, triggers GPU 130 to exit the subvector looping mode and begin executing in the regular mode. Accordingly, set 1302 of instructions representing section 6 in the modified shader program would be executed by GPU 130 in regular mode, then GPU 130 would switch to subvector looping mode to execute set 1304 of instructions representing section 7, and then GPU 130 would switch back to regular mode to execute set 1306 of instructions representing section 8.

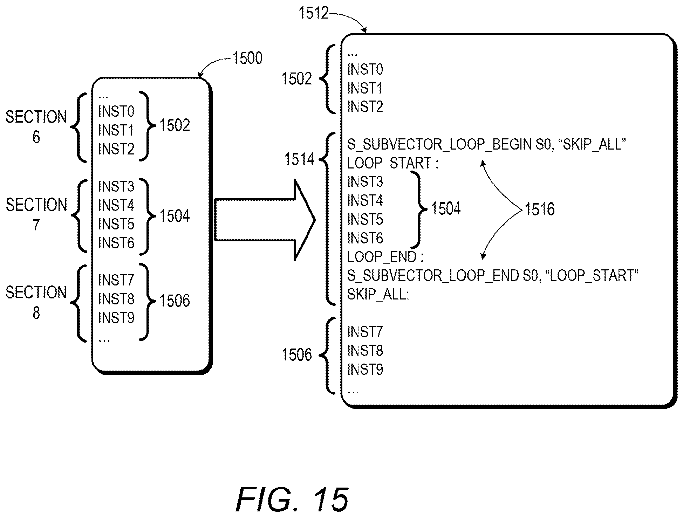

This example demonstrates the modification performed when a single section with VGPR usage in excess of the VGPR usage threshold is to be executed between two sections with VGPR usage that does not exceed the VGPR usage threshold. In instances where multiple sections are to be executed in a row while GPU 130 is in the subvector looping mode, rather than insert a subvector looping mode entry instruction 1308 and a subvector looping mode exit instruction 1310 for each such section separately, the shader compiler 1018 instead may insert a single subvector looping mode entry instruction 1308 before the first instruction of the first section in this sequence and insert a single subvector looping mode exit instruction 1310 after the last instruction of the last section in this sequence. For example, as sections 3-5 each exceeds the VGPR usage threshold 1202, in generating the modified shader program shader compiler 1018 may insert a single subvector looping mode entry instruction 1308 before the first instruction of section 3 and insert a single subvector looping mode exit instruction 1310 after the last instruction of section 5. Moreover, although FIG. 13 is described above, and FIGs. 14 and 15 described below, on the basis of modification of the shader program 1008 so that the sections identified as having expected register usage exceeding the threshold are modified so as to reconfigure the GPU 130 from regular mode as a default mode to the subvector looping mode, in other embodiments the subvector looping mode is the default mode, and the shader compiler 1018 instead modifies the sections having register usage that does not exceed the threshold so as to trigger the GPU 130 to switch from the subvector looping mode as the default mode to the regular mode for execution of such sections.

Referring now to FIG. 14, a replication-based modification scheme for software-implemented subvector looping is shown. In instances wherein GPU 130 does not provide hardware-implementation for the subvector looping mode or in which it is undesirable to utilize any such hardware implementation, GPU 130 may be configured to provide the subvector looping mode through a software reconfiguration of the shader program 1008 in which the instructions of the section to be executed in the subvector looping mode are replicated once for each portion of the wavefront for which the section is to be executed separately. To illustrate, block 1400 of FIG. 14 depicts a portion of code of shader program 1008 representing sections 6, 7, and 8 from the example of FIG. 13. Section 6 is represented by a set 1402 of instruction having instructions INST0-INST2, section 7 is represented by a set 1404 of instructions having instructions INST3-INST6, and section 8 is represented by a set of instructions 1406 having instructions INST7-INST9. In the example of FIG. 12, sections 6 and 8 have VGPR usages that do not exceed the specified VGPR usage threshold 1202 (FIG. 12), whereas section 7 has a VGPR usage that exceeds the specified VGPR usage threshold 1202.

Accordingly, in this example the shader compiler 1018 modifies the shader program 1008 to provide for execution of the set 1304 of instructions on only one portion of a wavefront at a time by replicating the set 1304 in the modified shader program for each portion of the wavefront, as well as inserting instructions to limit execution of each replicated set 1404 of instructions to a corresponding wavefront. To illustrate, as illustrated by block 1412 representing the resulting portion of the modified shader program, the set 1404 of instructions for section 7 is replaced by a replacement set 1414 of instructions, which includes two replicas of the set 1404 of instructions, denoted set 1404_L and set 1404_H in the resulting modified shader program. Replicated set 1404_H is inserted for the lower half of the wavefront and replicated set 1404_H is inserted for the higher half of the wavefront. As illustrated, replacement set 1414 of instructions further includes instructions that limit execution of the instructions of replicated set 1404_L to the first half of the wavefront and limit execution of the instructions of replicated set 1404_H to the second half of the wavefront.

Referring now to FIG. 15, a loop-based modification scheme for software-implemented subvector looping is shown. Rather than replicate the set of instructions of a section to be executed in a software-based subvector looping mode, GPU 130 instead may be configured to provide the subvector looping mode through a software reconfiguration of the shader program 1008 in which the instructions are added to the section to be executed in the subvector looping mode to that an iteration of the section is executed for each portion of the wavefront. To illustrate, block 1500 of FIG. 15 depicts the portion of code of shader program 1008 representing sections 6, 7, and 8 from the example of FIG. 12. Section 6 is represented by a set 1402 of instruction having instructions INST0-INST2, section 7 is represented by a set 1404 of instructions having instructions INST3-INST6, and section 8 is represented by a set of instructions 1506 having instructions INST7-INST9. As previously noted, sections 6 and 8 have VGPR usages that do not exceed the specified VGPR usage threshold 1202 (FIG. 12), whereas section 7 has a VGPR usage that exceeds the specified VGPR usage threshold 1202.

In this example the shader compiler 1018 modifies the shader program 1008 to provide for execution of the set 1504 of instructions on only one portion of a wavefront at a time by including instructions that effectively place the set 1504 of instructions in a loop in the modified shader program, and which cause each iteration of the loop to be executed for a different portion of the same wavefront in sequence. To illustrate, as illustrated by block 1512 representing the resulting portion of the modified shader program, the set 1504 of instructions for section 7 is replaced by a replacement set 1414 of instructions, which includes instructions 1516 that place the set 1504 of instructions in a loop and which provide that each iteration of the loop is performed on a separate portion of the wavefront. As shown, these instructions 1516 include the function calls "S_SUBVECTOR_LOOP_END" and "S_SUBVECTOR_LOOP_BEGIN, which represents the following functions:

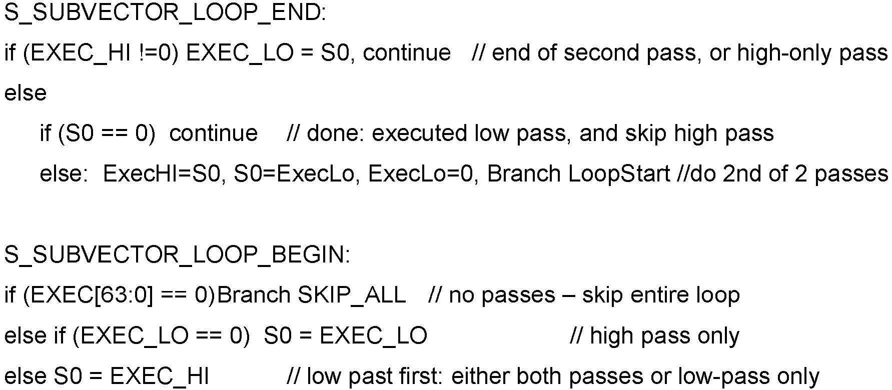

As such, if EXEC_HI = 0, the set 1504 of instructions is executed only once: EXEC_LO is stored in S0 and restored at the end, but it is zero anyway. If EXEC_LO was zero at the start, the same result. If both halves of EXEC mask are non-zero, the low pass is performed first (storing EXECHI in S0), then EXECHI is restored and saved off EXECLO and the pass is performed again. EXECLO is then restored at the end of the second pass. The "pass #" is encoded by observing which half of EXEC is zero.

In some embodiments, certain aspects of the techniques described above may implemented by one or more processors of a processing system executing software. The software includes one or more sets of executable instructions stored or otherwise tangibly embodied on a non-transitory computer readable storage medium. The software can include the instructions and certain data that, when executed by the one or more processors, manipulate the one or more processors to perform one or more aspects of the techniques described above. Such non-transitory computer readable storage media can include, for example, optical media (e.g., compact disc (CD), digital versatile disc (DVD), Blu-Ray disc), magnetic media (e.g., floppy disc , magnetic tape, or magnetic hard drive), volatile memory (e.g., random access memory (RAM) or cache), non-volatile memory (e.g., read-only memory (ROM) or Flash memory), or microelectromechanical systems (MEMS)-based storage media. The computer readable storage medium may be embedded in the computing system (e.g., system RAM or ROM), fixedly attached to the computing system (e.g., a magnetic hard drive), removably attached to the computing system (e.g., an optical disc or Universal Serial Bus (USB)-based Flash memory), or coupled to the computer system via a wired or wireless network (e.g., network accessible storage (NAS)). The executable instructions stored on the non-transitory computer readable storage medium may be in source code, assembly language code, object code, or other instruction format that is interpreted or otherwise executable by one or more processors.

Note that not all of the activities or elements described above in the general description are required, that a portion of a specific activity or device may not be required, and that one or more further activities may be performed, or elements included, in addition to those described. Still further, the order in which activities are listed are not necessarily the order in which they are performed. Also, the concepts have been described with reference to specific embodiments. However, one of ordinary skill in the art appreciates that various modifications and changes can be made without departing from the scope of the present disclosure as set forth in the claims below. Accordingly, the specification and figures are to be regarded in an illustrative rather than a restrictive sense, and all such modifications are intended to be included within the scope of the present disclosure.

Benefits, other advantages, and solutions to problems have been described above with regard to specific embodiments. However, the benefits, advantages, solutions to problems, and any feature(s) that may cause any benefit, advantage, or solution to occur or become more pronounced are not to be construed as a critical, required, or essential feature of any or all the claims. Moreover, the particular embodiments disclosed above are illustrative only, as the disclosed subject matter may be modified and practiced in different but equivalent manners apparent to those skilled in the art having the benefit of the teachings herein. No limitations are intended to the details of construction or design herein shown, other than as described in the claims below. It is therefore evident that the particular embodiments disclosed above may be altered or modified and all such variations are considered within the scope of the disclosed subject matter. Accordingly, the protection sought herein is as set forth in the claims below.

## Claims

1. A computer-implemented method comprising:
modifying, at a compiler of a processing system, a shader program so that first sections of the shader program requiring a number of registers for execution of an entire wavefront that is in excess of a specified threshold are configured to be executed in a first mode and second sections of the shader program requiring a number of registers for execution of an entire wavefront not in excess of the specified threshold are configured to be executed in a second mode;
executing the modified shader program at a processor of the processing system;
wherein in the first mode the processor schedules a plurality of execution units of the processor to execute a set of instructions of the shader program for a first portion of the wavefront prior to scheduling the plurality of execution units to execute the set of instructions for a second portion of the wavefront, the first portion of the wavefront comprising a first subset of work items of a plurality of work items in the wavefront and the second portion of the wavefront comprising a second subset of work items of the plurality of work items different from the first subset of work items, wherein the first portion and the second portion comprise the entire wavefront; and
wherein in the second mode the processor schedules the plurality of execution units to execute a single instruction of the shader program for both the first portion and the second portion of the wavefront prior to scheduling the plurality of execution units to execute a next single instruction of the shader program for both the first portion and the second portion of the wavefront.

2. The method of claim 1, wherein modifying the shader program comprises:
responsive to identifying a first section of the shader program:
inserting a first command into the shader program preceding the identified first section, the first command to configure the processor to operate in the first mode; and
inserting a second command into the shader program following the identified first section, the second command to configure the processor to operate in the second mode.

3. The method of claim 1 or 2, wherein modifying the shader program comprises:
responsive to identifying a first section of the shader program, modifying the shader program to replace instructions of the identified first section with a first set of instructions representing a first iteration of the instructions of the identified first section to be executed for the first portion of the wavefront and a second set of instructions representing a second iteration of the instructions of the identified first section to be executed for the second portion of the wavefront.

4. The method of claim 1, wherein modifying the shader program comprises:
responsive to identifying a first section of the shader program, modifying the shader program to implement a first loop of instructions of the identified first section to be executed for the first portion of the wavefront and a second loop of the instructions of the identified first section to be executed for the second portion of the wavefront.

5. The method of claim 1, further comprising:
analyzing, at the compiler, the shader program to identify an expected register usage for each section of the shader program, the expected register usage for a section indicating a number of registers expected to be required to execute the corresponding section at the processor for the entire wavefront.

6. The method of claim 5, wherein analyzing the shader program comprises performing a register liveness analysis of the shader program.

7. The method of any of claims 1 to 6, wherein the first portion of the wavefront comprises a first half of the wavefront and the second portion of the wavefront comprises a second half of the wavefront.

8. The method of any of claims 1 to 7, wherein the specified threshold is set based on a number of registers available for use at each compute unit of the processor.

9. A system comprising:
a first processor implementing a compiler configured to modify a shader program so that first sections of the shader program requiring a number of registers for execution of an entire wavefront that is in excess of a specified threshold are configured to be executed in a first mode and second sections of the shader program requiring a number of registers for execution of an entire wavefront that is not in excess of the specified threshold are configured to be executed in a second mode; and
a second processor configured to execute the modified shader program, wherein in the first operating mode the second processor schedules a plurality of execution units of the second processor to execute a set of instructions of the shader program for a first portion of the wavefront prior to scheduling the plurality of execution units to execute the set of instructions for a second portion of the wavefront, and wherein in the second mode the second processor schedules the plurality of execution units to execute a single instruction of the shader program for both the first portion and the second portion of the wavefront prior to scheduling the plurality of execution units to execute a next single instruction of the shader program for both the first portion and the second portion of the wavefront, the first portion of the wavefront comprising a first subset of work items of a plurality of work items in the wavefront and the second portion of the wavefront comprising a second subset of work items of the plurality of work items different from the first subset of work items, wherein the first portion and the second portion comprise the entire wavefront.

10. The system of claim 9, wherein the first processor is configured to modify the shader program by:
responsive to identifying a first section of the shader program:
inserting a first command into the shader program preceding the identified first section, the first command to configure the second processor to operate in the first mode; and
inserting a second command into the shader program following the identified first section, the second command to configure the second processor to operate in the second mode.

11. The system of claim 9, wherein the first processor is configured to modify the shader program by:
responsive to identifying a first section of the shader program, modifying the shader program to replace instructions of the identified first section with a first set of instructions representing a first iteration of the instructions of the identified first section to be executed for the first portion of the wavefront and a second set of instructions representing a second iteration of the instructions of the identified first section to be executed for the second portion of the wavefront.

12. The system of claim 9, wherein the first processor is configured to modify the shader program by:
responsive to identifying a first section of the shader program, modifying the shader program to implement a first loop of instructions of the identified first section to be executed for the first portion of the wavefront and a second loop of the instructions of the identified first section to be executed for the second portion of the wavefront.

13. The system of any of claims 9 to 12, wherein the compiler is further configured to analyze the shader program to identify an expected register usage for each section of the shader program, the expected register usage for a section indicating a number of registers expected to be required to execute the corresponding section at the first processor for the entire wavefront; and wherein in the first operating mode the plurality of execution units of the second processor are configured to share subsets of registers.

## Patentansprüche

1. Computerimplementiertes Verfahren, umfassend:
Modifizieren, in einem Compiler eines Verarbeitungssystems, eines Shader-Programms, sodass erste Anteile des Shader-Programms, die eine Anzahl von Registern für eine Ausführung einer gesamten Wellenfront benötigen, die einen angegebenen Schwellenwert überschreitet, konfiguriert sind, um in einem ersten Modus ausgeführt zu werden, und zweite Anteile des Shader-Programms, die eine Anzahl von Registern für die Ausführung einer gesamten Wellenfront benötigen, die den angegebenen Schwellenwert nicht überschreitet, konfiguriert sind, um in einem zweiten Modus ausgeführt zu werden;
Ausführen des modifizierten Shader-Programms auf einem Prozessor des Verarbeitungssystems;
wobei der Prozessor in dem ersten Modus eine Vielzahl von Ausführungseinheiten des Prozessors plant, um einen Satz von Anweisungen des Shader-Programms für einen ersten Abschnitt der Wellenfront vor dem Planen der Vielzahl von Ausführungseinheiten auszuführen, um den Satz von Anweisungen für einen zweiten Abschnitt der Wellenfront auszuführen, der erste Abschnitt der Wellenfront umfassend eine erste Teilmenge von Arbeitselementen einer Vielzahl von Arbeitselementen in der Wellenfront und der zweite Abschnitt der Wellenfront umfassend eine zweite Teilmenge von Arbeitselementen der Vielzahl von Arbeitselementen, die sich von der ersten Teilmenge von Arbeitselementen unterscheidet, wobei der erste Abschnitt und der zweite Abschnitt die gesamte Wellenfront umfassen; und
wobei der Prozessor in dem zweiten Modus die Vielzahl von Ausführungseinheiten plant, um eine einzelne Anweisung des Shader-Programms sowohl für den ersten Abschnitt als auch den zweiten Teil der Wellenfront vor dem Planen der Vielzahl von Ausführungseinheiten auszuführen, um eine nächste einzelne Anweisung des Shader-Programms sowohl für den ersten als auch den zweiten Teil der Wellenfront auszuführen.

2. Verfahren nach Anspruch 1, wobei das Modifizieren des Shader-Programms umfasst:
als Reaktion auf das Identifizieren eines ersten Anteils des Shader-Programms:
Einfügen eines ersten Befehls in das Shader-Programm vor dem identifizierten ersten Anteil, wobei der erste Befehl den Prozessor konfigurieren soll, um in dem ersten Modus in Betrieb zu sein; und
Einfügen eines zweiten Befehls in das Shader-Programm nach dem identifizierten ersten Anteil, wobei der zweite Befehl den Prozessor konfigurieren soll, um in dem zweiten Modus in Betrieb zu sein.

3. Verfahren nach Anspruch 1 oder 2, wobei das Modifizieren des Shader-Programms umfasst:
als Reaktion auf das Identifizieren eines ersten Anteils des Shader-Programms, Modifizieren des Shader-Programms, um Anweisungen des identifizierten ersten Anteils durch einen ersten Satz von Anweisungen, der eine erste Iteration der Anweisungen des identifizierten ersten Anteils darstellt, die für den ersten Abschnitt der Wellenfront ausgeführt werden sollen, und durch einen zweiten Satz von Anweisungen zu ersetzen, der eine zweite Iteration der Anweisungen des identifizierten ersten Anteils darstellt, die für den zweiten Teil der Wellenfront ausgeführt werden sollen.

4. Verfahren nach Anspruch 1, wobei das Modifizieren des Shader-Programms umfasst:
als Reaktion auf das Identifizieren eines ersten Anteils des Shader-Programms, Modifizieren des Shader-Programms, um eine erste Schleife von Anweisungen des identifizierten ersten Anteils, die für den ersten Teil der Wellenfront ausgeführt werden sollen, und eine zweite Schleife der Anweisungen des identifizierten ersten Anteils zu implementieren, die für den zweiten Teil der Wellenfront ausgeführt werden sollen.

5. Verfahren nach Anspruch 1, ferner umfassend:
Analysieren, in dem Compiler, des Shader-Programms, um eine voraussichtliche Registernutzung für jeden Anteil des Shader-Programms zu identifizieren, wobei die voraussichtliche Registernutzung für einen Anteil eine Anzahl von Registern angibt, die voraussichtlich erforderlich sind, um den entsprechenden Anteil in dem Prozessor für die gesamte Wellenfront auszuführen.

6. Verfahren nach Anspruch 5, wobei das Analysieren des Shader-Programms ein Durchführen einer Registerlebendigkeitsanalyse des Shader-Programms umfasst.

7. Verfahren nach einem der Ansprüche 1 bis 6, wobei der erste Abschnitt der Wellenfront eine erste Hälfte der Wellenfront umfasst und der zweite Abschnitt der Wellenfront eine zweite Hälfte der Wellenfront umfasst.

8. Verfahren nach einem der Ansprüche 1 bis 7, wobei der angegebene Schwellenwert basierend auf einer Anzahl von Registern festgelegt wird, die für eine Nutzung in jeder Recheneinheit des Prozessors verfügbar sind.

9. System, umfassend:
einen ersten Prozessor, der einen Compiler implementiert, der konfiguriert ist, um ein Shader-Programm zu modifizieren, sodass erste Anteile des Shader-Programms, die eine Anzahl von Registern für die Ausführung einer gesamten Wellenfront benötigen, die einen angegebenen Schwellenwert überschreitet, konfiguriert sind, um in einem ersten Modus ausgeführt zu werden, und zweite Anteile des Shader-Programms, die eine Anzahl von Registern für die Ausführung einer gesamten Wellenfront benötigen, die den angegebenen Schwellenwert nicht überschreitet, konfiguriert sind, um in einem zweiten Modus ausgeführt zu werden; und
einen zweiten Prozessor, der konfiguriert ist, um das modifizierte Shader-Programm auszuführen, wobei der zweite Prozessor in dem ersten Betriebsmodus eine Vielzahl von Ausführungseinheiten des zweiten Prozessors plant, um einen Satz von Anweisungen des Shader-Programms für einen ersten Abschnitt der Wellenfront vor dem Planen der Vielzahl von Ausführungseinheiten auszuführen, um den Satz von Anweisungen für einen zweiten Abschnitt der Wellenfront auszuführen, und wobei der zweite Prozessor in dem zweiten Modus die Vielzahl von Ausführungseinheiten plant, um eine einzelne Anweisung des Shader-Programms sowohl für den ersten als auch für den zweiten Abschnitt der Wellenfront vor dem Planen der Vielzahl von Ausführungseinheiten auszuführen, um eine nächste einzelne Anweisung des Shader-Programms sowohl für den ersten als auch für den zweiten Abschnitt der Wellenfront auszuführen, der erste Abschnitt der Wellenfront umfassend eine erste Teilmenge von Arbeitselementen einer Vielzahl von Arbeitselementen in der Wellenfront und der zweite Abschnitt der Wellenfront umfassend eine zweite Teilmenge von Arbeitselementen der Vielzahl von Arbeitselementen, die sich von der ersten Teilmenge von Arbeitselementen unterscheidet, wobei der erste Abschnitt und der zweite Abschnitt die gesamte Wellenfront umfassen.

10. System nach Anspruch 9, wobei der erste Prozessor konfiguriert ist, um das Shader-Programm zu modifizieren durch:
als Reaktion auf das Identifizieren eines ersten Anteils des Shader-Programms:
Einfügen eines ersten Befehls in das Shader-Programm vor dem identifizierten ersten Anteil, wobei der erste Befehl den zweiten Prozessor konfigurieren soll, um in dem ersten Modus in Betrieb zu sein; und
Einfügen eines zweiten Befehls in das Shader-Programm nach dem identifizierten ersten Anteil, wobei der zweite Befehl den zweiten Prozessor konfigurieren soll, um in dem zweiten Modus in Betrieb zu sein.

11. System nach Anspruch 9, wobei der erste Prozessor konfiguriert ist, um das Shader-Programm zu modifizieren durch:
als Reaktion auf das Identifizieren eines ersten Anteils des Shader-Programms, Modifizieren des Shader-Programms, um Anweisungen des identifizierten ersten Anteils durch einen ersten Satz von Anweisungen, der eine erste Iteration der Anweisungen des identifizierten ersten Anteils darstellt, die für den ersten Abschnitt der Wellenfront ausgeführt werden sollen, und durch einen zweiten Satz von Anweisungen zu ersetzen, der eine zweite Iteration der Anweisungen des identifizierten ersten Anteils darstellt, die für den zweiten Teil der Wellenfront ausgeführt werden sollen.

12. System nach Anspruch 9, wobei der erste Prozessor konfiguriert ist, um das Shader-Programm zu modifizieren durch:
als Reaktion auf das Identifizieren eines ersten Anteils des Shader-Programms, Modifizieren des Shader-Programms, um eine erste Schleife von Anweisungen des identifizierten ersten Anteils, die für den ersten Teil der Wellenfront ausgeführt werden sollen, und eine zweite Schleife der Anweisungen des identifizierten ersten Anteils zu implementieren, die für den zweiten Teil der Wellenfront ausgeführt werden sollen.

13. System nach einem der Ansprüche 9 bis 12, wobei der Compiler ferner konfiguriert ist, um das Shader-Programm zu analysieren, um eine voraussichtliche Registernutzung für jeden Anteil des Shader-Programms zu identifizieren, wobei die voraussichtliche Registernutzung für einen Anteil eine Anzahl von Registern angibt, die voraussichtlich erforderlich sind, um den entsprechenden Anteil auf dem ersten Prozessor für die gesamte Wellenfront auszuführen; und wobei in dem ersten Betriebsmodus die Vielzahl von Ausführungseinheiten des zweiten Prozessors konfiguriert ist, um Registerteilmengen gemeinsam zu nutzen.

## Revendications

1. Procédé implémenté par ordinateur comprenant :
la modification, au niveau d'un compilateur d'un système de traitement, d'un programme de nuanceur de sorte que des premières sections du programme de nuanceur exigeant un nombre de registres pour exécution d'un front d'onde entier qui est supérieur à un seuil spécifié sont configurées pour être exécutées dans un premier mode et des secondes sections du programme de nuanceur exigeant un nombre de registres pour exécution d'un front d'onde entier non supérieur au seuil spécifié sont configurées pour être exécutées dans un second mode ;
l'exécution du programme de nuanceur modifié au niveau d'un processeur du système de traitement ;
dans lequel dans le premier mode le processeur planifie une pluralité d'unités d'exécution du processeur pour exécuter un ensemble d'instructions du programme de nuanceur pour une première partie du front d'onde avant la planification de la pluralité d'unités d'exécution pour exécuter l'ensemble d'instructions pour une seconde partie du front d'onde, la première partie du front d'onde comprenant un premier sous-ensemble d'éléments de travail d'une pluralité d'éléments de travail dans le front d'onde et la seconde partie du front d'onde comprenant un second sous-ensemble d'éléments de travail de la pluralité d'éléments de travail différent du premier sous-ensemble d'éléments de travail, dans lequel la première partie et la seconde partie comprennent le front d'onde entier ; et
dans lequel dans le second mode le processeur planifie la pluralité d'unités d'exécution pour exécuter une instruction unique du programme de nuanceur tant pour la première partie que pour la seconde partie du front d'onde avant la planification de la pluralité d'unités d'exécution pour exécuter une instruction unique suivante du programme de nuanceur tant pour la première partie que pour la seconde partie du front d'onde.

2. Procédé selon la revendication 1, dans lequel la modification du programme de nuanceur comprend :
en réponse à l'identification d'une première section du programme de nuanceur :
l'insertion d'une première commande dans le programme de nuanceur précédant la première section identifiée, la première commande permettant de configurer le processeur pour fonctionner dans le premier mode ; et
l'insertion d'une seconde commande dans le programme de nuanceur à la suite de la première section identifiée, la seconde commande permettant de configurer le processeur pour fonctionner dans le second mode.

3. Procédé selon la revendication 1 ou 2, dans lequel la modification du programme de nuanceur comprend :
en réponse à l'identification d'une première section du programme de nuanceur, la modification du programme de nuanceur pour remplacer des instructions de la première section identifiée par un premier ensemble d'instructions représentant une première itération des instructions de la première section identifiée à exécuter pour la première partie du front d'onde et un second ensemble d'instructions représentant une seconde itération des instructions de la première section identifiée à exécuter pour la seconde partie du front d'onde.

4. Procédé selon la revendication 1, dans lequel la modification du programme de nuanceur comprend :
en réponse à l'identification d'une première section du programme de nuanceur, la modification du programme de nuanceur pour implémenter une première boucle d'instructions de la première section identifiée à exécuter pour la première partie du front d'onde et une seconde boucle des instructions de la première section identifiée à exécuter pour la seconde partie du front d'onde.

5. Procédé selon la revendication 1, comprenant en outre :
l'analyse, au niveau du compilateur, du programme de nuanceur pour identifier une utilisation attendue de registres pour chaque section du programme de nuanceur, l'utilisation attendue de registres pour une section indiquant un nombre de registres qui devraient être requis pour exécuter la section correspondante au niveau du processeur pour le front d'onde entier.

6. Procédé selon la revendication 5, dans lequel l'analyse du programme de nuanceur comprend la mise en œuvre d'une analyse de vitalité de registres du programme de nuanceur.

7. Procédé selon l'une quelconque des revendications 1 à 6, dans lequel la première partie du front d'onde comprend une première moitié du front d'onde et la seconde partie du front d'onde comprend une seconde moitié du front d'onde.

8. Procédé selon l'une quelconque des revendications 1 à 7, dans lequel le seuil spécifié est réglé en fonction d'un nombre de registres disponibles pour utilisation au niveau de chaque unité de calcul du processeur.

9. Système comprenant :
un premier processeur implémentant un compilateur configuré pour modifier un programme de nuanceur de sorte que des premières sections du programme de nuanceur exigeant un nombre de registres pour exécution d'un front d'onde entier qui est supérieur à un seuil spécifié sont configurées pour être exécutées dans un premier mode et des secondes sections du programme de nuanceur exigeant un nombre de registres pour exécution d'un front d'onde entier qui n'est pas supérieur au seuil spécifié sont configurées pour être exécutées dans un second mode ; et
un second processeur configuré pour exécuter le programme d'ombrage modifié, dans lequel dans le premier mode de fonctionnement le second processeur planifie une pluralité d'unités d'exécution du second processeur pour exécuter un ensemble d'instructions du programme de nuanceur pour une première partie du front d'onde avant la planification de la pluralité d'unités d'exécution pour exécuter l'ensemble d'instructions pour une seconde partie du front d'onde, et dans lequel dans le second mode le second processeur planifie la pluralité d'unités d'exécution pour exécuter une instruction unique du programme de nuanceur tant pour la première partie et pour la seconde partie du front d'onde avant la planification de la pluralité d'unités d'exécution pour exécuter une instruction unique suivante du programme de nuanceur tant pour la première partie que pour la seconde partie du front d'onde, la première partie du front d'onde comprenant un premier sous-ensemble d'éléments de travail d'une pluralité d'éléments de travail dans le front d'onde et la seconde partie du front d'onde comprenant un second sous-ensemble d'éléments de travail de la pluralité d'éléments de travail différent du premier sous-ensemble d'éléments de travail, dans lequel la première partie et la seconde partie comprennent le front d'onde entier.

10. Système selon la revendication 9, dans lequel le premier processeur est configuré pour modifier le programme de nuanceur par :
en réponse à l'identification d'une première section du programme de nuanceur :
l'insertion d'une première commande dans le programme de nuanceur précédant la première section identifiée, la première commande permettant de configurer le second processeur pour fonctionner dans le premier mode ; et
l'insertion d'une seconde commande dans le programme de nuanceur à la suite de la première section identifiée, la seconde commande permettant de configurer le second processeur pour fonctionner dans le second mode.

11. Système selon la revendication 9, dans lequel le premier processeur est configuré pour modifier le programme de nuanceur par :
en réponse à l'identification d'une première section du programme de nuanceur, la modification du programme de nuanceur pour remplacer des instructions de la première section identifiée par un premier ensemble d'instructions représentant une première itération des instructions de la première section identifiée à exécuter pour la première partie du front d'onde et un second ensemble d'instructions représentant une seconde itération des instructions de la première section identifiée à exécuter pour la seconde partie du front d'onde.

12. Système selon la revendication 9, dans lequel le premier processeur est configuré pour modifier le programme de nuanceur par :
en réponse à l'identification d'une première section du programme de nuanceur, la modification du programme de nuanceur pour implémenter une première boucle d'instructions de la première section identifiée à exécuter pour la première partie du front d'onde et une seconde boucle des instructions de la première section identifiée à exécuter pour la seconde partie du front d'onde.

13. Système selon l'une quelconque des revendications 9 à 12, dans lequel le compilateur est configuré en outre pour analyser le programme de nuanceur pour identifier une utilisation attendue de registres pour chaque section du programme de nuanceur, l'utilisation attendue de registres pour une section indiquant un nombre de registres qui devraient être requis pour exécuter la section correspondante au niveau du premier processeur pour le front d'onde entier ; et dans lequel dans le premier mode de fonctionnement la pluralité d'unités d'exécution du second processeur sont configurées pour partager des sous-ensembles de registres.
